# EUROPÄISCHE PATENTSCHRIFT

(11) **EP 2 128 110 B1**
(45) Veröffentlichungstag und Bekanntmachung des Hinweises auf die Patenterteilung: **17.08.2016**
(21) Anmeldenummer: 08157144.0
(22) Anmeldetag: 29.05.2008
(51) Int. Cl.: C04B 24/00, C04B 24/04

(54) **Zusatzmittel für hydraulische Bindemittel mit langer Verarbeitungszeit und hoher Frühfestigkeit**
Additive for hydraulic bonding agent with long processing time and high early stability
Additif pour liant hydraulique doté d'un temps de traitement plus long et d'une plus grande résistance à court terme

(43) Veröffentlichungstag der Anmeldung: 02.12.2009
(73) Patentinhaber: Sika Technology AG, 6340 Baar (CH)
(72) Erfinder: Bürge, Christian, 5503 Schafisheim (CH); Wombacher, Franz, 8916 Jonen (CH); Peter, André, 8307 Effretikon (CH)
(74) Vertreter: Sika Patent Attorneys

(56) Entgegenhaltungen:
- WO-A-97/49646
- WO-A-2005/044898
- DE-A1- 3 140 808
- US-A- 2 492 790

## Beschreibung

### Technisches Gebiet

Die Erfindung betrifft Zusatzmittel für hydraulische Bindemittel und daraus hergestellte Systeme wie Beton und Mörtel. Insbesondere betrifft die vorliegende Erfindung die Verwendung eines Abbinde- und Erhärtungsbeschleuniger für hydraulische Bindemittel umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist. Zudem betrifft die Erfindung ein Bindemittel enthaltendes Gemisch, ein Verfahren zur Herstellung von einem Bindemittel enthaltenden Gemisch und ein Verfahren zur Beschleunigung des Abbindens und Erhärtens von hydraulischen Bindemitteln sowie daraus hergestelltem Mörtel oder Beton.

### Stand der Technik

Bei Beton- oder Stahlbetonfertigteilen oder bei Fahrbahn- oder Pistensanierungen wird vermehrt eine hohe Frühfestigkeit gefordert, damit die Fertigteile bereits nach wenigen Stunden entschalt, transportiert, gestapelt oder vorgespannt werden können oder die Fahrbahnen oder Pisten befahren werden können. Um diese Zielsetzung in der Praxis zu erreichen, werden neben leistungsfähigen Betonrezepturen, wie niedriger w/z-Wert oder hoher Zementgehalt, oftmals auch Wärme- oder Dampfbehandlungen angewendet. Diese Behandlungen brauchen viel Energie, so dass aufgrund steigender Energiepreise, erheblicher Investitionskosten und Dauerhaftigkeits- sowie Sichtbetonproblemen zunehmend von dieser Behandlung abgesehen wird und nach anderen Wegen zur Beschleunigung des Erhärtungsprozesses gesucht wird.

Beschleunigende Zusätze stellen bislang keine befriedigende Alternative zur Wärme- oder Dampfbehandlung dar. Es sind zwar viele Substanzen bekannt, welche das Abbinden und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0076927 B1 und EP 0 946 451 B1 sind alkalifreie Erstarrungsbeschleuniger für hydraulische Bindemittel bekannt, welche diese Nachteile vermeiden sollen. Zur Beschleunigung des Erstarrens und Erhärtens eines hydraulischen Bindemittels, wie Zement, Kalk, hydraulischer Kalk und Gips sowie daraus hergestelltem Mörtel und Beton, wird ein alkalifreier Erstarrungs- und Erhärtungsbeschleunigers zugegeben, wobei dieser Beschleuniger Aluminiumhydroxid und gegebenenfalls Aluminiumsalze und organischen Carbonsäuren enthält.

Solche bekannten Beschleuniger beschleunigen zwar das Abbinden und Erhärten von hydraulisch abbindenden Systemen, sie sind aber teuer, ihre Anwendung ist beschränkt wegen mangelnder Dauerhaftigkeit und ungenügender Wirksamkeit, und sie reduzieren gleichzeitig auch die Verarbeitungszeit und wirken sich negativ auf die Endfestigkeiten des Betons aus. Weitere Nachteile solcher Abbinde- und Erhärtungsbeschleuniger sind zudem eine relativ geringe Frühfestigkeit in den ersten Stunden und Tagen und die ungenügende Stabilität der Lösung.

Die momentan bekannten Systeme, wo die Hydratation eines Betons durch die Zugabe eines Abbindebeschleunigers beschleunigt wird, beziehen sich meist auf den Spritzbeton. Die bekannten Methoden zur Hydratationskontrolle haben den Nachteil, dass die Zementmischungen nach Zugabe des Beschleunigers sehr schnell abbinden. Das ist insbesondere bei der Anwendung als Spritzbeton meist auch erwünscht. Solche bekannten Systeme sind aber nicht geeignet, wenn die Zementmischung nach Aktivierung noch weiter verarbeitet werden muss oder wenn der verarbeitete Beton nach kurzer Zeit belastet werden muss. Bei den bekannten Systemen für die Spritzbetonanwendung ist eine weitere Verarbeitbarkeit nach der Aktivierung jedoch nicht gegeben.

Es besteht also das Bedürfnis, ein Zusatzmittel zu entwickeln, welches den Abbinde- und Erhärtungsprozess von Zusammensetzungen mit hydraulischen Bindemitteln beschleunigt, welches nicht nur die Anwendung im Spritzbeton ermöglicht, sondern mit welchem eine schnell härtende Mörtel- oder Betonzusammensetzung hergestellt werden kann, welche eine hohe Frühfestigkeit und trotzdem gute Verarbeitungseigenschaften aufweist und somit frühes Ausschalen oder frühes Belasten ermöglicht.

### Darstellung der Erfindung

Der Erfindung liegt die Aufgabe zugrunde, einen Abbinde- und Erhärtungsbeschleuniger oder ein Zusatzmittel bereitzustellen, welches einerseits das Abbinden beschleunigt, andererseits aber nach Zugabe zu einer Zement- oder Betonmischung die Weiterverarbeitbarkeit der Zement- oder Betonmischung für eine gewisse Zeit ermöglicht. Zudem ist erwünscht, mit dem Beschleuniger oder dem Zusatzmittel eine möglichst hohe Frühfestigkeit zu erzielen. Weiter sollen entsprechende Verfahren und Verwendungen zur Herstellung sowie zur Beschleunigung des Abbindens und Erhärtens von hydraulischen Bindemitteln bereitgestellt werden.

Erfindungsgemäss wird dies durch die Merkmale der unabhängigen Ansprüche erreicht.

Die Vorteile der Erfindung sind unter anderem darin zu sehen, dass eine hydraulisch abbindende Zusammensetzung, z.B. eine Zement- oder Betonmischung nach Zugabe mit dem erfindungsgemässen Beschleuniger verarbeitbar bleibt. Die Aktivierung bewirkt eine starke Abbindebeschleunigung, welche im Gegensatz zu nicht aktiviertem Beton zu massiv früheren Festigkeiten führt und beispielsweise auch ein früheres Ausschalen oder Belasten ermöglicht. Nach der Aktivierung des Betons bleibt aber die Verarbeitbarkeit für eine gewünschte Zeit vollständig erhalten.

Weitere vorteilhafte Ausgestaltungen der Erfindung ergeben sich aus der Beschreibung und den Unteransprüchen.

### Weg zur Ausführung der Erfindung

Ein erster Aspekt der Erfindung betrifft die Verwendung eines Abbinde- und Erhärtungsbeschleunigers zur Beschleunigung des Abbindens und Erhärtens von hydraulischen Bindemitteln sowie daraus hergestelltem Mörtel oder Beton, insbesondere von Schnellzement, wobei der Abbinde- und Erhärtungsbeschleuniger mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist, umfasst.

Der Ester wird durch Veresterung aus einem mehrwertigen Alkohol mit einer Säure oder deren Salz erhalten. Vorzugsweise ist der Ester ein Partialester eines mehrwertigen Alkohols, vorzugsweise eines zwei- oder dreiwertigen Alkohols. Unter dem Begriff "partieller Ester oder Partialester eines mehrwertigen Alkohols" versteht man, dass der mehrwertige Alkohol neben einer oder mehreren Esterbindungen noch eine oder mehrere freie Hydroxygruppen aufweist. Der Ester kann ein Mono-, Di- oder Triester sein. Besonders bevorzugter Ester ist der Monoester, vorzugsweise ein Monoester eines zwei- oder dreiwertigen Alkohols.

Unter dem Begriff "mehrwertiger Alkohol" wird ein Alkohol mit mehr als einer Hydroxygruppe verstanden, beispielsweise mit zwei, drei, vier oder fünf Hydroxygruppen. Besonders bevorzugt ist ein Alkohol mit zwei oder drei Hydroxygruppen, das heisst ein zwei- oder dreiwertiger Alkohol. Als Alkohole geeignet sind beispielsweise mehrwertige Alkylalkohole wie Propandiol, Butandiol, oder Glycerin, Diglycerin, Polyglycerin, Trimethylolethan, Trimethylolpropan, 1,3,5-Pentantriol, Erythrit, Pentaerythrit, Dipentaerythrit, Sorbit, Sorbitan, oder Isosorbid. Besonders bevorzugt ist Glycerin oder Propandiol, insbesondere Glycerin.

Als Säure oder deren Salz zur Herstellung des Esters ist insbesondere die Phosphorsäure oder deren Salz besonders bevorzugt. Ebenfalls geeignet ist die phosphorige Säure oder eine C₂ bis C₂₀ Carbonsäure. Als Carbonsäure kommt insbesondere Monocarbonsäure, vorzugsweise eine C₄ bis C₂₀ Monocarbonsäure, insbesondere bevorzugt eine Fettsäure in Frage. Besonders gute Resultate werden mit einer ungesättigten Säure, insbesondere der Ölsäure, erreicht.

Die Säure kann als freie Säure oder auch als Salz oder Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Vorzugsweise werden die freien Säuregruppen des Esters ganz oder teilweise neutralisiert, wobei das Salz ein Alkali- oder Erdalkalisalz, das heisst ein Salz ein- oder mehrwertiger Kationen, vorzugsweise ein Natrium-, Kalium-, Calcium-, Magnesium-, Zink-, oder Aluminiumsalz, vorzugsweise ein Natrium- oder Aluminiumsalz, ist.

Geeignete erfindungsgemäss verwendbare Abbinde- und Erhärtungsbeschleuniger sind beispielsweise Ester, insbesondere Monoester, ausgewählt aus der Gruppe bestehend aus Glycerinphosphat, Glycerinbutyrat, Glycerinoctanoat, Glycerindecanoat, Glycerinlaurat, Glycerinmyristat, Glycerinpalmiat, Glycerinstearat, oder Glycerinoleat. Besonders bevorzugt ist Glycerinmonooleat oder Glycerinmonophosphat. Insbesondere bevorzugt ist Glycerin-2-phosphat oder Glycerin-3-phosphat.

Der erfindungsgemäss verwendbare Abbinde- und Erhärtungsbeschleuniger findet in unterschiedlichen Bereichen Anwendung, insbesondere in der Beton- und Zementtechnologie. Der Beschleuniger verfügt über besonders gute Eigenschaft als Beschleuniger für hydraulisch abbindende Zusammensetzungen, das heisst, dass er zur Beschleunigung des Abbindens und Erhärtens von hydraulischen Bindemitteln, insbesondere von Schnellzement, sowie daraus hergestelltem Mörtel oder Beton, verwendet werden kann. Zudem kann mit dem erfindungsgemässen Beschleuniger Mörtel oder Beton hergestellt werden, welcher eine hohe Früh- sowie Endfestigkeit aufweist. Der erfindungsgemäss verwendbare Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten, damit die Fertigteile bereits nach wenigen Stunden entschalt, transportiert, gestapelt oder vorgespannt werden können oder die Fahrbahnen oder Pisten befahren werden können.

Überraschenderweise hat sich der erfindungsgemäss vrewendbare Abbinde- und Erhärtungsbeschleuniger als besonders schneller Beschleuniger, verglichen mit herkömmlichen Beschleunigern, erwiesen. Zudem hat der erfindungsgemäss verwendbare Beschleuniger weder einen negativen Einfluss auf die Verarbeitungszeit, noch auf die Endfestigkeit des damit hergestellten Mörtels oder Betons.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung ist gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Der erfindungsgemäss verwendbare Beschleuniger kann zur erfindungsgemässen Verwendung sowohl in flüssiger als auch in fester Form, sowohl allein oder als Bestandteil eines Zusatzmittels verwendet werden. Die Erfindung betrifft daher zusätzlich ein Zusatzmittel in flüssiger oder fester Form umfassend mindestens einen erfindungsgemäss verwendbaren Beschleuniger und mindestens einen Verflüssiger.

Um die Verarbeitbarkeit zu verbessern und die Verarbeitungszeit nach Zugabe des erfindungsgemäss verwendbaren Beschleunigers zu einem hydraulischen Bindemittel zu verlängern, enthält das Zusatzmittel zusätzlich zum Beschleuniger einen Verflüssiger. Als Verflüssiger kommen beispielsweise Lignosulfonate, sulfonierte Naphthalin-Formaldehyd Kondensate, sulfonierte Melamin-Formaldehyd-Kondensate, sulfonierte Vinylcopolymere oder Polycarboxylatverflüssiger, wie sie beispielsweise in der Betonchemie als Hochleistungsverflüssiger bekannt sind, oder Mischungen davon, in Frage. Bevorzugt sind insbesondere Polycarboxylatverflüssiger wie sie beispielsweise in EP 0 056 627 B1, EP 0 840 712 B1, EP 1 136 508 A1, EP 1 138 697 B1 oder EP 1 348 729 A1 beschrieben sind. Besonders bevorzugt sind Verflüssiger, welche nach der polymeranalogen Umsetzung hergestellt wurden, wie beispielsweise beschrieben in EP 1 138 697 B1 oder EP 1 348 729 A1.

Der Beschleuniger oder das Zusatzmittel enthaltend den Beschleuniger kann auch weitere Bestandteile enthalten. Beispiele für weitere Bestandteile sind Lösungsmittel, insbesondere Wasser, oder Additive, wie weitere beschleunigende Substanzen wie beispielsweise Thiocyanate, Nitrate oder Aluminiumsalze, Säuren oder deren Salze oder aminhaltige Substanzen wie Alkanolamine, Verzögerer, Schwindreduzierer, Entschäumer, oder Schaumbildner.

Falls der erfindungsgemäss verwendbare Beschleuniger oder das Zusatzmittel enthaltend den Beschleuniger in flüssiger Form verwendet werden, wird für die Umsetzung vorzugsweise ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.

Der erfindungsgemäss verwendbare Beschleuniger oder das Zusatzmittel enthaltend den Beschleuniger können auch in festem Aggregatzustand vorliegen, beispielsweise als Pulver, Schuppen, Pellets, Granulate oder Platten und lassen sich in dieser Form problemlos transportieren und lagern.

Der erfindungsgemäss verwendbare Beschleuniger kann beispielsweise im festen Aggregatzustand vorliegen und mit einem Verflüssiger, welcher ebenfalls im festen Aggregatzustand vorliegt, vermischt werden und so über längere Zeit gelagert oder transportiert werden. Der erfindungsgemäss verwendbare Beschleuniger kann aber auch mit einem flüssigen Verflüssiger vermischt werden und als flüssiges Zusatzmittel eingesetzt werden. Das flüssige Zusatzmittel kann auch anschliessend wieder in den festen Aggregatzustand, beispielsweise in Pulverform, überführt werden, z.B. durch Sprühtrocknung, mit Hilfe von Schutzkolloiden oder anderen Trocknungshilfsmitteln.

Der erfindungsgemäss verwendbare Beschleuniger oder das Zusatzmittel enthaltend den Beschleuniger können im festem Aggregatzustand auch Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt.

Der erfindungsgemäss verwendbare Beschleuniger oder das Zusatzmittel enthaltend den Beschleuniger können auch einer üblichen Betonzusammensetzung mit oder kurz vor oder kurz nach der Zugabe des Wassers beigegeben werden. Als besonders geeignet gezeigt hat sich hierbei die Zugabe des erfindungsgemäss verwendbaren Beschleunigers in Form einer wässrigen Lösung oder Dispersion, insbesondere als Anmachwasser oder als Teil des Anmachwassers oder als Teil eines flüssigen Zusatzmittels, welches mit dem Anmachwasser zum hydraulischen Bindemittel gegeben wird.

Der erfindungsgemäss verwendbare Beschleuniger oder das Zusatzmittel kann in flüssiger Form auch vor oder nach dem Mahlen des hydraulischen oder latent hydraulischen Bindemittels auf das Bindemittel, den Beton, Mörtel, sowie nicht hydraulische Zusatzstoffe aufgesprüht werden. Beispielsweise kann das hydraulische Bindemittel teilweise mit dem Beschleuniger oder dem Zusatzmittel enthaltend den Beschleuniger beschichtet werden. Dies ermöglicht die Herstellung eines hydraulischen Bindemittels, insbesondere Zement oder latent hydraulische Schlacke, welche bereits den Beschleuniger oder das Zusatzmittel enthaltend den Beschleuniger enthält und so als Fertigmischung, beispielsweise als sogenannten Schnellzement, gelagert und verkauft werden kann. Dieser Zement weist nach Zugabe des Anmachwassers die gewünschten Eigenschaften des schnellen Abbindens und der hohen Frühfestigkeit auf, ohne dass zusätzlich zum Anmachwasser auf der Baustelle ein weiteres Zusatzmittel zugefügt werden muss.

In einem weiteren Aspekt betrifft die vorliegende Erfindung ein Bindemittel enthaltendes Gemisch umfassend mindestens ein hydraulisch abbindendes Bindemittel und mindestens einen erfindungsgemäss verwendbaren Abbinde- und Erhärtungsbeschleuniger für hydraulische Bindemittel, umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist oder ein wie vorstehend beschriebenes Zusatzmittel in einer Menge von 0.001 bis 10 Gew.-% bezogen auf das Gewicht des Bindemittels. Als Bindemittel kommen beispielsweise Zement, insbesondere Portlandzemente oder Tonerdeschmelzzemente und respektive deren Mischungen mit Flugaschen, Silica fume, Schlacke, Hüttensande, Gips und Kalksteinfiller oder gebrannter Kalk, ein latent hydraulisches Pulver oder inertes mikroskopisches Pulver in Frage. Als Bindemittel enthaltende Gemische kommen vorzugsweise Betonzusammensetzungen in Frage.

Weiterhin kann das Gemisch weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten.

Vorzugsweise enthält das Bindemittel enthaltende Gemisch zusätzlich zum Beschleuniger mindestens einen Verflüssiger, vorzugsweise einen Verflüssiger auf Polycarboxylatether-Basis (PCE).

Der erfindungsgemäss verwendbare Beschleuniger wird bevorzugt in einer Menge von 0.001 bis 10 Gew.-% bezogen auf das Gewicht des Bindemittels verwendet, um die gewünschte Wirkung zu erzielen. Es können auch mehrere Beschleuniger gemischt verwendet werden, um die gewünschte Wirkung zu erzielen.

In einem weiteren Aspekt betrifft die vorliegende Erfindung ein Verfahren zur Herstellung eines Bindemittels enthaltenden Gemisches wobei der mindestens eine erfindungsgemäss verwendbare Beschleuniger, umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist, getrennt oder als Zusatzmittel vorgemischt in fester oder flüssiger Form dem Bindemittel zugegeben wird.

In einem weiteren Aspekt betrifft die vorliegende Erfindung ein Verfahren zur Beschleunigung des Abbindens und Erhärtens von hydraulischen Bindemitteln sowie daraus hergestelltem Mörtel oder Beton, wobei einem Gemisch, welches hydraulische Bindemittel enthält, ein erfindungsgemässe verwendbarer Abbinde- und Erhärtungsbeschleuniger in einer Menge von 0.001 bis 10 Gew.-%, vorzugsweise 0.01 bis 1 Gew.-%, insbesondere bevorzugt 0.01 bis 0.1 Gew.-%, bezogen auf das Gewicht des Zements zugegeben wird. Wird ein Zusatzmittel enthaltend den erfindungsgemäss verwendbaren Beschleuniger und vorzugsweise zusätzlich mindestens ein Verflüssiger zu einem hydraulischen Bindemittel zugegeben, beträgt die zugegebene Menge des gesamten Zusatzmittels 0.01 bis 10 Gew.-%, vorzugsweise 0.1 bis 10 Gew.-%, noch mehr bevorzugt 1 bis 5 Gew.-%, bezogen auf das Gewicht des hydraulischen Bindemittels.

Mit der vorliegenden Erfindung wird ein Zusatzmittel für hydraulische Bindemittel bereitgestellt, welches den Abbinde- und Erhärtungsprozess der hydraulischen Bindemittel beschleunigt ohne sich negativ auf die Verarbeitungszeiten, die Festigkeitsentwicklung oder die Dauerhaftigkeit der damit hergestellten Mörtel- oder Betonzusammensetzungen auszuwirken. Das erfindungsgemässe Zusatzmittel und insbesondere der erfindungsgemäss verwendbare Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten. Dadurch können die Fertigteile bereits nach wenigen Stunden entschalt, transportiert, gestapelt oder vorgespannt werden oder die Fahrbahnen oder Pisten befahren werden.

Überraschenderweise hat sich der erfindungsgemäss verwendbare Abbinde- und Erhärtungsbeschleuniger als besonders schneller Beschleuniger, verglichen mit herkömmlichen Beschleunigern, erwiesen. Zudem hat der erfindungsgemäss verwendbare Beschleuniger weder einen negativen Einfluss auf die Verarbeitungszeit, noch auf die Endfestigkeit des damit hergestellten Mörtels oder Betons.

### Ausführungsbeispiele

### 1. Herstellung der Zusatzmittel

### Zusatzmittel Z1

Es wurden 5.0 g eines Glycerin-2-Monophosphates (beispielsweise Glycerin-phosphat Dinatriumsalz Pentahydrat erhältlich bei Fluka, Schweiz) in 160.0 g eines flüssigen Polycarboxylatether-Verflüssigers (Sika® ViscoCrete®-20 HE, erhältlich bei Sika Schweiz AG) gelöst. Von dieser Lösung wurde 1.6 Gew.-%, beziehungsweise 1.65 Gew.-%, bezogen auf den Zement mit dem Anmachwasser zur Mörtelmischung gegeben.

### Zusatzmittel Z2

Es wurden 0.43 g eines Glycerin-2-Monophosphates (beispielsweise Glycerin-phosphat Dinatriumsalz Pentahydrat erhältlich bei Fluka, Schweiz) und 13.6 g eines flüssigen Polycarboxylatether-Verflüssigers (Sika® ViscoCrete®-20 HE, erhältlich bei Sika Schweiz AG) gleichzeitig mit dem Anmachwasser zur Mörtelmischung gegeben, was einer Menge Verflüssiger von 1.6 Gew-%, beziehungsweise Beschleuniger von 0.05 Gew.-%, bezogen auf den Zement, entspricht.

### Zusatzmittel Z3

Es wurden 19.0 g Glycerin-1-monooleat (beispielsweise erhältlich bei Fluka, Schweiz) in 160.0 g eines flüssigen Polycarboxylatether-Verflüssigers (Sika® ViscoCrete®-20 HE, erhältlich bei Sika Schweiz AG) gelöst. Von dieser Lösung wurde 1.6 Gew.-% bezogen auf den Zement mit dem Anmachwasser zur Mörtelmischung gegeben.

### Zusatzmittel Z4

Es wurden 1.77 g einer 85 %-igen Glycerin-Lösung (erhältlich beispielsweise bei Fluka, Schweiz) und 6.21 g eines Trinatriumphosphats (beispielsweise erhältlich bei Fluka, Schweiz) in 160.0 g eines flüssigen Polycarboxylatether-Verflüssigers (Sika® ViscoCrete®-20 HE, erhältlich bei Sika Schweiz AG) gelöst. Von dieser Lösung wurde 1.68 Gew.-% bezogen auf den Zement mit dem Anmachwasser zur Mörtelmischung gegeben.

### Zusatzmittel Z5

Es wurden 1.77 g einer 85 %-igen Glycerin-Lösung (erhältlich beispielsweise bei Fluka, Schweiz) in 160.0 g eines flüssigen Polycarboxylatether-Verflüssigers (Sika® ViscoCrete®-20 HE, erhältlich bei Sika Schweiz AG) gelöst. Von dieser Lösung wurde 1.62 Gew.-% bezogen auf den Zement mit dem Anmachwasser zur Mörtelmischung gegeben.

### Zusatzmittel Z6

Es wurden 6.21 g eines Trinatriumphosphats (beispielsweise erhältlich bei Fluka, Schweiz) in 160.0 g eines flüssigen Polycarboxylatether-Verflüssigers (Sika® ViscoCrete®-20 HE, erhältlich bei Sika Schweiz AG) gelöst. Von dieser Lösung wurde 1.66 Gew.-% bezogen auf den Zement mit dem Anmachwasser zur Mörtelmischung gegeben.

### Zusatzmittel Z7

Es wurden 13.6 g eines flüssigen Polycarboxylatether-Verflüssigers (Sika® ViscoCrete®-20 HE, erhältlich bei Sika Schweiz AG) genommen. Dieser wurde mit dem Anmachwasser zur Mörtelmischung gegeben, was einer Menge von 1.6 Gew.-% bezogen auf den Zement entspricht.

### Zusatzmittel Z8

Es wurden 13.6 g eines flüssigen Polycarboxylatether-Verflüssigers (Glenium® ACE30, erhältlich bei BASF Admixtures Deutschland GmbH) genommen. Dieser wurde mit dem Anmachwasser zur Mörtelmischung gegeben, was einer Menge von 1.6 Gew.-% bezogen auf den Zement entspricht.

| Nr. | Beschleuniger | Verflüssiger | Besonderes |
|---|---|---|---|
| **Z1** | 3 Gew.-% Glycerin-2-Monophosphat | 97 Gew.-% VC-20HE | Lösung |
| **Z2** | 3 Gew.-% Glycerin-2-Monophosphat | 97 Gew.-% VC-20HE | Getrennte Einzelkomponenten |
| **Z3** | 10.6 Gew.-% Glycerin-1-monooleat | 89.4 Gew.-% VC-20HE | Lösung |
| **Z4** | 1.1 Gew.-% Glycerin (85%), 3.7 Gew.-% Trinatriumphosphat | 95.2 Gew.-% VC-20HE | Lösung |
| **Z5** | 1.1 Gew.-% Glycerin (85%), | 98.9 Gew.-% VC-20HE | Lösung |
| **Z6** | 3.7 Gew.-% Trinatriumphosphat | 96.3 Gew.-% VC-20HE | Lösung |
| **Z7** | - | 100 Gew.-% VC-20HE | Lösung |
| **Z8** | n.b. | Glenium® ACE30 | Lösung |

| | | | |
|---|---|---|---|
| Tabelle 1: Zusatzmittelzusammensetzung in Gew.-% bezogen auf das Zusatzmittel. N.b. bedeutet nicht bekannt. | | | |

### 1. Mörteltests

Die Wirksamkeit des erfindungsgemäss verwendbaren Beschleunigers beziehungsweise der Zusatzmittel umfassend den erfindungsgemässen Beschleuniger, sowie herkömmlicher Zusatzmittel, wurde im Mörtel getestet.

| Zusammensetzung der Mörtelmischung (**MM**): (Grösstkorn 8mm) | Menge in g |
|---|---|
| Portlandzement (Schweizer CEM I 52.5R) | 850 |
| Kalksteinfiller | 141 |
| Sand 0-1 mm | 738 |
| Sand 1-4 mm | 1107 |
| Sand 4-8 mm | 1154 |

Als Zement wurde Schnellzement CEM I 52.5R mit unterschiedlicher Feinheit verwendet. Die Mörtelmischung **MM1** wurde mit Schnellzement **S1** hergestellt, welcher eine Feinheit nach Blaine von 7000 cm²/g hat. Die Mörtelmischung **MM2** wurde mit Schnellzement **S2** hergestellt, welcher eine Feinheit nach Blaine von 5000 cm²/g hat.

Die Sande, der Filler und der Zement wurden 1 Minute in einem Hobart-Mischer trocken gemischt. Innerhalb von 30 Sekunden wurde das Anmachwasser, in dem das Zusatzmittel gelöst oder dispergiert war, zugegeben und noch weitere 2.5 Minuten gemischt. Die Gesamt-Mischzeit nass war 3 Minuten. Der Wasser/Zement-Wert (w/z-Wert) betrug 0.4.

Zur Bestimmung der Wirksamkeit des erfindungsgemässen Beschleunigers beziehungsweise des Zusatzmittels wurden die Mörtelmischungen **MM1** beziehungsweise **MM2** mit den verschiedenen Zusatzmitteln versetzt (siehe Tabelle 2 und 3). Die Beispiele **B1** bis **B6** mit den Zusatzmitteln **Z1, Z2** und **Z3** stellen erfindungsgemässe Beispiele dar, während die Beispiele **V7** bis **V12** mit den Zusatzmitteln **Z4** bis **Z8** Vergleichsbeispiele darstellen.

Zur Bestimmung der Wirksamkeit des erfindungsgemäss verwendbaren Beschleunigers beziehungsweise des Zusatzmittels wurde das Ausbreitmass (ABM) (Tabelle 2) sowie die Druckfestigkeit (Tabelle 3) bestimmt.

| Nr. | Zusatzmittel (Gew-%) | Mörtelmischung | ABM nach 0 min | ABM nach 20 min | ABM nach 40 min | ABM nach 60 min |
|---|---|---|---|---|---|---|
| B1 | 1.6 Gew.-% **Z1** | **MM1** | 232 | 233 | 193 | 140 |
| B2 | 1.6 Gew.-% **Z1** | **MM2** | 250 | 247 | 251 | 213 |
| B3 | 1.65 Gew.-% **Z1** | **MM2** | 263 | 242 | 224 | 215 |
| B4 | 1.65 Gew.-% **Z2** | **MM1** | 253 | 239 | 216 | 172 |
| B5 | 1.65 Gew.-% **Z2** | **MM2** | 258 | 240 | 227 | 223 |
| B6 | 1.6 Gew.-% **Z3** | **MM1** | 253 | 220 | 198 | 189 |
| V7 | 1.68 Gew.-% **Z4** | **MM2** | 264 | 228 | 212 | 217 |
| V8 | 1.62 Gew.-% **Z5** | **MM2** | 261 | 228 | 229 | 224 |
| V9 | 1.66 Gew.-% **Z6** | **MM2** | 262 | 232 | 224 | 207 |
| V10 | 1.6 Gew.-% **Z7** | **MM2** | 263 | 245 | 237 | 231 |
| V11 | 1.6 Gew.-% **Z8** | **MM1** | 264 | 243 | 235 | 212 |
| V12 | 1.6 Gew.-% **Z8** | **MM2** | 257 | 235 | 213 | 210 |

| | | | | | | |
|---|---|---|---|---|---|---|
| Tabelle 2: Ausbreitmass (ABM) in mm nach 0, 20, 40, und 60 Minuten (min). Das Zusatzmittel ist in Gew.-% bezogen auf den Zement angegeben. | | | | | | |

Das Ausbreitmass (ABM) des Mörtels wurde gemäss EN 1015-3 bestimmt.

Tabelle 2 zeigt, dass der erfindungsgemäss verwendbare Beschleuniger im Zusatzmittel das Ausbreitmass der Mörtelzusammensetzungen nicht negativ beeinflusst und die Mörtelzusammensetzungen vergleichbar lange verarbeitbar sind wie mit herkömmlichen Zusatzmitteln ohne erfindungsgemäss verwendbaren Beschleuniger. Für die Herstellung von Fertigteilen in der Vorfabrikation oder auch für den Strassenbau sind vor allem die Werte des Ausbreitmasses nach 20 oder 40 Minuten wesentlich. Werte des Ausbreitmasses von über 220 mm nach 20 Minuten oder über 190 mm nach 40 Minuten stellen in jedem Fall ausgezeichnete Werte dar.

Für die Anwendung im Strassen- oder Brückenbau, bei der Vorfabrikation von Betonelementen bei Beton- und Stahlbetonfertigteilen oder bei Pistensanierungen, wo die Fertigteile bereits nach wenigen Stunden entschalt, transportiert, gestapelt oder vorgespannt werden müssen oder die Fahrbahnen oder Pisten befahren werden müssen, sind aber hohe Festigkeitswerte nach 4 beziehungsweise 6 Stunden von grösserer Bedeutung als ein gutes Ausbreitmass.

Die Prüfung zur Bestimmung der Druckfestigkeit (in N/mm²) erfolgte mittels eines Nadelpenetrometers (Mecmesin BFG500) und an Prismen (40 x 40 x 160mm) nach 4 Stunden, 6 Stunden und 8 Stunden (siehe Tabelle 3).

| Nr. | Zusatzmittel (Gew-%) | Mörtelmischung | Nach 4 h | Nach 6 h | Nach 8 h |
|---|---|---|---|---|---|
| B1 | 1.6 Gew.-% **Z1** | **MM1** | 4.9 | 24.1 | 35.2 |
| B2 | 1.6 Gew.-% **Z1** | **MM2** | 3.2 | 16.8 | 29.3 |
| B3 | 1.65 Gew.-% **Z1** | **MM2** | 3.8 | 21.2 | 34.1 |
| B4 | 1.65 Gew.-% **Z2** | **MM1** | 3.2 | 15.6 | 28.9 |
| B5 | 1.65 Gew.-% **Z2** | **MM2** | 4.7 | 20.4 | 34.3 |
| B6 | 1.6 Gew.-% **Z3** | **MM1** | 1.5 | 13.5 | 26.5 |
| V7 | 1.68 Gew.-% **Z4** | **MM2** | 1.7 | 6.3 | 18.6 |
| V8 | 1.62 Gew.-% **Z5** | **MM2** | 2.1 | 7.0 | 20.2 |
| V9 | 1.66 Gew.-% **Z6** | **MM2** | 1.2 | 4.8 | 14.6 |
| V10 | 1.6 Gew.-% **Z7** | **MM2** | 1.9 | 6.4 | 18.1 |
| V11 | 1.6 Gew.-% **Z8** | **MM1** | 2.5 | 11.1 | 25.3 |
| V12 | 1.6 Gew.-% **Z8** | **MM2** | 2.3 | 9.9 | 24.8 |

| | | | | | |
|---|---|---|---|---|---|
| Tabelle 3: Druckfestigkeiten in N/mm² nach 4, 6 und 8 Stunden (h). | | | | | |

Tabelle 3 zeigt, dass die Mörtelzusammensetzungen, welchen das Zusatzmittel **Z1, Z2** oder **Z3** mit dem erfindungsgemäss verwendbaren Beschleuniger, entweder als Lösung (**Z1, Z3**) oder als Einzelkomponenten (**Z2**) zugegeben wurde, sehr gute Frühfestigkeitswerte aufweisen. Die Festigkeitswerte sind nach 4 (**Z1, Z2**) und insbesondere nach 6 Stunden (**Z1**, **Z2, Z3**) deutlich höher als mit herkömmlichen Zusatzmitteln. Sie weisen zum Teil sogar fast eine Verdoppelung auf (**B1** bis **B5** mit den Zusatzmitteln **Z1** und **Z2**).

Ausgezeichnete Resultate wurden mit einem Glycerin-Phosphorsäureester und einem Polycarboxylatether-Verflüssiger (**B1** bis **B5**) erzielt. Wird nicht der Ester aus Glycerin und Phosphorsäure, sondern werden die Einzelkomponenten Glycerin und Trinatriumphosphat getrennt verwendet, werden weniger gute Festigkeitswerte erzielt (**V7 - V9**).

Auch mit einem Glycerin-Monooleat (**B6**) wurden nach 6 und nach 8 Stunden bessere Festigkeitswerte erreicht als mit herkömmlichen Zusatzmitteln.

Nur mit Verflüssiger alleine (**V10**) oder mit einem herkömmlichen Zusatzmittel (Glenium® ACE 30, welches üblicherweise für Schnellzement verwendet wird) (**V11, V12**) wurden deutlich tiefere Festigkeitswerte erreicht.

Diese Resultate verdeutlichen, dass mit dem erfindungsgemäss verwendbaren Beschleuniger der Abbinde- und Erhärtungsprozess der hydraulischen Bindemittel deutlich beschleunigt werden kann und hervorragende Frühfestigkeitswerte erreicht werden ohne sich negativ auf die Verarbeitungszeiten, die Festigkeitsentwicklung oder die Dauerhaftigkeit der damit hergestellten Mörtel- oder Betonzusammensetzungen auszuwirken.

Selbstverständlich ist die Erfindung nicht auf die gezeigten und beschriebenen Ausführungsbeispiele beschränkt.

## Patentansprüche

1. Verwendung eines Abbinde- und Erhärtungsbeschleuniger zur Beschleunigung des Abbindens und Erhärtens von hydraulischen Bindemitteln sowie daraus hergestelltem Mörtel oder Beton, insbesondere von Schnellzement, wobei der Abbinde- und Erhärtungsbeschleuniger mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist, umfasst.

2. Verwendung nach Anspruch 1, **dadurch gekennzeichnet, dass** die Säure eine Phosphorsäure ist.

3. Verwendung nach Anspruch 1, **dadurch gekennzeichnet, dass** die Säure eine Monocarbonsäure, vorzugsweise eine C₄ bis C₂₀ Monocarbonsäure ist.

4. Verwendung nach einem der Ansprüche 1 oder 3, **dadurch gekennzeichnet, dass** die Säure eine ungesättigte Säure, vorzugsweise eine Ölsäure, ist.

5. Verwendung nach einem der vorhergehenden Ansprüche, **dadurch gekennzeichnet, dass** freie Säuregruppen des Esters ganz oder teilweise neutralisiert werden, wobei das Salz ein Alkalisalz oder ein Salz mehrwertiger Kationen, vorzugsweise ein Natrium-, Calcium- oder Aluminiumsalz ist.

6. Verwendung nach einem der vorhergehenden Ansprüche, **dadurch gekennzeichnet, dass** der Ester ein partieller Ester eines mehrwertigen Alkohols, vorzugsweise ein Monoester eines zwei- oder dreiwertigen Alkohols, ist.

7. Verwendung nach einem der vorhergehenden Ansprüche, **dadurch gekennzeichnet, dass** der mehrwertige Alkohol Glycerin ist.

8. Verwendung nach einem der vorhergehenden Ansprüche, **dadurch gekennzeichnet, dass** der Ester Glycerinphosphat ist.

9. Verwendung nach einem der Ansprüche 1 bis 7, **dadurch gekennzeichnet, dass** der Ester Glycerinoleat ist.

10. Verwendung nach einem der Ansprüche 1 bis 9, **dadurch gekennzeichnet, dass** der Abbinde- und Erhärtungsbeschleuniger als Bestandteil eines Zusatzmittels zusammen mit mindestens einem Verflüssiger verwendet wird.

11. Verwendung nach Anspruch 10, **dadurch gekennzeichnet, dass** der Verflüssiger Lignosulfonate, sulfonierte Naphthalin-Formaldehyd Kondensate, sulfonierte Melamin-Formaldehyd-Kondensate, sulfonierte Vinylcopolymere, Polycarboxylate oder Mischungen derselben umfasst oder daraus besteht.

12. Zusatzmittel für hydraulisch abbindende Systeme umfassend mindestens einen Abbinde- und Erhärtungsbeschleuniger für hydraulische Bindemittel, umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist und mindestens einen Verflüssiger.

13. Zusatzmitteln nach Anspruch 12, **dadurch gekennzeichnet, dass** der Verflüssiger Lignosulfonate, sulfonierte Naphthalin-Formaldehyd Kondensate, sulfonierte Melamin-Formaldehyd-Kondensate, sulfonierte Vinylcopolymere, Polycarboxylate oder Mischungen derselben umfasst oder daraus besteht.

14. Bindemittel enthaltendes Gemisch umfassend mindestens ein hydraulisch abbindendes Bindemittel und mindestens einen Abbinde- und Erhärtungsbeschleuniger für hydraulische Bindemittel, umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist oder ein Zusatzmittel nach einem der Ansprüche 12 oder 13 in einer Menge von 0.001 bis 10 Gew.-% bezogen auf das Gewicht des Bindemittels.

15. Verfahren zur Herstellung von einem Bindemittel enthaltenden Gemisch gemäss Anspruch 14, **dadurch gekennzeichnet, dass** ein Abbinde- und Erhärtungsbeschleuniger für hydraulische Bindemittel, umfassend mindestens einen Ester eines mehrwertigen Alkohols mit einer Säure und/oder deren Salze, wobei die Säure eine Phosphorsäure, phosphorige Säure oder eine C₂ bis C₂₀ Carbonsäure ist, getrennt oder als Zusatzmittel vorgemischt in fester oder flüssiger Form einem hydraulisch abbindenden Bindemittel zugegeben wird.

16. Verfahren zur Beschleunigung des Abbindens und Erhärtens von hydraulischen Bindemitteln sowie daraus hergestelltem Mörtel oder Beton, **dadurch gekennzeichnet, dass** einem Gemisch, welches hydraulische Bindemittel enthält, ein Abbinde- und Erhärtungsbeschleuniger wie in einem der Ansprüche 1 bis 9 definiert oder ein Zusatzmittel nach einem der Ansprüche 12 oder 13 in einer Menge von 0.001 bis 10 Gew.-% bezogen auf das Gewicht des hydraulischen Bindemittels zugegeben wird.

## Claims

1. Use of a setting and hardening accelerator for accelerating the setting and hardening of hydraulic binders and mortar or concrete produced therefrom, especially of quick-setting cement, wherein the setting and hardening accelerator comprises at least one ester of a polyhydric alcohol with an acid and/or salts thereof, where the acid is a phosphoric acid, phosphorous acid or a C₂ to C₂₀ carboxylic acid.

2. Use according to Claim 1, **characterized in that** the acid is a phosphoric acid.

3. Use according to Claim 1, **characterized in that** the acid is a monocarboxylic acid, preferably a C₄ to C₂₀ monocarboxylic acid.

4. Use according to either of Claims 1 and 3, **characterized in that** the acid is an unsaturated acid, preferably an oleic acid.

5. Use according to any of the preceding claims, **characterized in that** all or some free acid groups of the ester are neutralized, the salt being an alkali metal salt or a salt of polyvalent cations, preferably a sodium, calcium or aluminum salt.

6. Use according to any of the preceding claims, **characterized in that** the ester is a partial ester of a polyhydric alcohol, preferably a monoester of a di- or trihydric alcohol.

7. Use according to any of the preceding claims, **characterized in that** the polyhydric alcohol is glycerol.

8. Use according to any of the preceding claims, **characterized in that** the ester is glyceryl phosphate.

9. Use according to any of Claims 1 to 7, **characterized in that** the ester is glyceryl oleate.

10. Use according to any of Claims 1 to 9, **characterized in that** the setting and hardening accelerator is used as a component of an admixture together with at least one plasticizer.

11. Use according to Claim 10, **characterized in that** the plasticizer comprises or consists of lignosulfonates, sulfonated naphthalene-formaldehyde condensates, sulfonated melamine-formaldehyde condensates, sulfonated vinyl copolymers, polycarboxylates or mixtures thereof.

12. Admixture for hydraulically setting systems comprising at least one setting and hardening accelerator for hydraulic binders, comprising at least one ester of a polyhydric alcohol with an acid and/or salts thereof, where the acid is a phosphoric acid, phosphorous acid or a C₂ to C₂₀ carboxylic acid, and at least one plasticizer.

13. Admixture according to Claim 12, **characterized in that** the plasticizer comprises or consists of lignosulfonates, sulfonated naphthalene-formaldehyde condensates, sulfonated melamine-formaldehyde condensates, sulfonated vinyl copolymers, polycarboxylates or mixtures thereof.

14. Binder-containing mixture comprising at least one hydraulically setting binder and at least one setting and hardening accelerator for hydraulic binders, comprising at least one ester of a polyhydric alcohol with an acid and/or salts thereof, where the acid is a phosphoric acid, phosphorous acid or a C₂ to C₂₀ carboxylic acid, or an admixture according to either of Claims 12 and 13 in an amount of 0.001 to 10% by weight based on the weight of the binder.

15. Process for producing a binder-containing mixture according to Claim 14, **characterized in that** a setting and hardening accelerator for hydraulic binders, comprising at least one ester of a polyhydric alcohol with an acid and/or salts thereof, where the acid is a phosphoric acid, phosphorous acid or a C₂ to C₂₀ carboxylic acid, is added to a hydraulically setting binder separately or premixed as an admixture in solid or liquid form.

16. Method for accelerating the setting and hardening of hydraulic binders and mortar or concrete produced therefrom, **characterized in that** a setting and hardening accelerator as defined in any of Claims 1 to 9 or an admixture according to either of Claims 12 and 13 is added in an amount of 0.001 to 10% by weight to a mixture which comprises hydraulic binder, based on the weight of the hydraulic binder.

## Revendications

1. Utilisation d'un accélérateur de prise et de durcissement pour accélérer la prise et le durcissement de liants hydrauliques, ainsi que d'un mortier ou béton fabriqué à partir de ceux-ci, notamment de ciment rapide, l'accélérateur de prise et de durcissement comprenant au moins un ester d'un alcool polyvalent avec un acide et/ou ses sels, l'acide étant un acide phosphorique, un acide phosphoreux ou un acide carboxylique en C₂ à C₂₀.

2. Utilisation selon la revendication 1, **caractérisée en ce que** l'acide est un acide phosphorique.

3. Utilisation selon la revendication 1, **caractérisée en ce que** l'acide est un acide monocarboxylique, de préférence un acide monocarboxylique en C₄ à C₂₀.

4. Utilisation selon l'une quelconque des revendications 1 ou 3, **caractérisée en ce que** l'acide est un acide insaturé, de préférence un acide oléique.

5. Utilisation selon l'une quelconque des revendications précédentes, **caractérisée en ce que** les groupes acides libres de l'ester sont neutralisés en totalité ou en partie, le sel étant un sel alcalin ou un sel de cations polyvalents, de préférence un sel de sodium, de calcium ou d'aluminium.

6. Utilisation selon l'une quelconque des revendications précédentes, **caractérisée en ce que** l'ester est un ester partiel d'un alcool polyvalent, de préférence un monoester d'un alcool bi- ou trivalent.

7. Utilisation selon l'une quelconque des revendications précédentes, **caractérisée en ce que** l'alcool polyvalent est la glycérine.

8. Utilisation selon l'une quelconque des revendications précédentes, **caractérisée en ce que** l'ester est le phosphate de glycérine.

9. Utilisation selon l'une quelconque des revendications 1 à 7, **caractérisée en ce que** l'ester est l'oléate de glycérine.

10. Utilisation selon l'une quelconque des revendications 1 à 9, **caractérisée en ce que** l'accélérateur de prise et de durcissement est utilisé en tant que constituant d'un additif conjointement avec au moins un liquéfiant.

11. Utilisation selon la revendication 10, **caractérisée en ce que** le liquéfiant comprend ou est constitué par des lignosulfonates, des condensats de naphtaline-formaldéhyde sulfonés, des condensats de mélamine-formaldéhyde sulfonés, des copolymères de vinyle sulfonés, des polycarboxylates ou leurs mélanges.

12. Additif pour systèmes à prise hydraulique, comprenant au moins un accélérateur de prise et de durcissement pour liants hydrauliques, comprenant au moins un ester d'un alcool polyvalent avec un acide et/ou ses sels, l'acide étant un acide phosphorique, un acide phosphoreux ou un acide carboxylique en C₂ à C₂₀, et au moins un liquéfiant.

13. Additif selon la revendication 12, **caractérisé en ce que** le liquéfiant comprend ou est constitué par des lignosulfonates, des condensats de naphtaline-formaldéhyde sulfonés, des condensats de mélamine-formaldéhyde sulfonés, des copolymères de vinyle sulfonés, des polycarboxylates ou leurs mélanges.

14. Mélange contenant un liant comprenant au moins un liant à prise hydraulique et au moins un accélérateur de prise et de durcissement pour liants hydrauliques, comprenant au moins un ester d'un alcool polyvalent avec un acide et/ou ses sels, l'acide étant un acide phosphorique, un acide phosphoreux ou un acide carboxylique en C₂ à C₂₀, ou un additif selon l'une quelconque des revendications 12 ou 13 en une quantité de 0,001 à 10 % en poids, par rapport au poids du liant.

15. Procédé de fabrication d'un mélange contenant un liant selon la revendication 14, **caractérisé en ce qu'**un accélérateur de prise et de durcissement pour liants hydrauliques, comprenant au moins un ester d'un alcool polyvalent avec un acide et/ou ses sels, l'acide étant un acide phosphorique, un acide phosphoreux ou un acide carboxylique en C₂ à C₂₀, est ajouté à un liant à prise hydraulique séparément ou pré-mélangé sous la forme d'un additif sous forme solide ou liquide.

16. Procédé d'accélération de la prise et du durcissement de liants hydrauliques, ainsi que d'un mortier ou béton fabriqué à partir de ceux-ci, **caractérisé en ce qu'**un accélérateur de prise et de durcissement tel que défini dans l'une quelconque des revendications 1 à 9 ou un additif selon l'une quelconque des revendications 12 ou 13 est ajouté à un mélange qui contient des liants hydrauliques en une quantité de 0,001 à 10 % en poids, par rapport au poids du liant hydraulique.
